# EUROPEAN PATENT APPLICATION

(11) **EP 3 104 090 A1**
(43) Date of publication of application: **14.12.2016**
(21) Application number: 15783404.5
(22) Date of filing: 13.04.2015
(51) Int. Cl.: F24F 11/02

(54) **CONTROL DEVICE OF MULTIPLE-TYPE AIR CONDITIONER, MULTIPLE-TYPE AIR CONDITIONER SYSTEM PROVIDED WITH SAME, AND CONTROL METHOD AND CONTROL PROGRAM FOR MULTIPLE-TYPE AIR CONDITIONER**

(30) Priority: 24.04.2014 JP 2014090321
(71) Applicant: Mitsubishi Heavy Industries, Ltd., Tokyo 108-8215 (JP)
(72) Inventor: KATO, Takahiro, Tokyo 108-8215 (JP)
(74) Representative: Intès, Didier Gérard André
(86) International application number: PCT/JP2015/061326
(87) International publication number: WO 2015/163176

(57) **Abstract**

To ensure the sensation of a compressor starting up in energy saving control. Provided is a control device of a multiple-type air conditioner provided with: a selection unit (41) having a first startup mode, in which a compressor (21) is controlled in a normal mode for a prescribed period of time until a temperature setting set in an indoor unit (7) is reached, and a second startup mode, in which the compressor (21) is controlled in an energy saving mode in which an upper limit is applied to a control amount of the compressor (21), in contrast with the normal mode, until a temperature setting set in the indoor unit (7) is reached, the selection unit (41) allowing selection of one of the first startup mode and the second startup mode; and a control unit (42) configured to control the compressor (21) according to one of the first startup mode and the second startup mode selected by the selection unit (41) after the compressor (21) has been started up.

## Description

### Technical Field

The present invention relates to a control device of a multiple-type air-conditioner, a multiple-type air conditioner system provided with the same, and a control method and a control program for the multiple-type air conditioner.

### Background Art

In a multiple-type air conditioner in which a plurality of indoor units are connected to a single outdoor unit, an operating pressure is constant irrespective of an indoor load, and control is performed so as to maintain a necessary capability in accordance with a load on each of the plurality of indoor units.

In Patent Document 1, noted below, technology is disclosed that improves operational efficiency by adjusting a target pressure such that a compressor rotational speed is reduced when an indoor unit is in a low load state, in which the load is low, and adjusting the compressor rotational speed to an original target pressure when the indoor unit is not in the low load state.

In Patent Document 2, noted below, technology is disclosed that reduces power consumption by setting a maximum frequency of a compressor in accordance with an indoor operational capacity, and performing control so as to inhibit the frequency from exceeding an upper limit frequency.

### Citation List

### Patent Literature

Patent Document 1: Japanese Unexamined Patent Application Publication No. 2011-202913A
Patent Document 2: Japanese Patent No. 5132757

### Summary of Invention

### Technical Problem

However, in the method of the above-described Patent Document 1, in the multiple-type air conditioner, since the capability of an outdoor unit is limited by evenly changing a target pressure thereof, a state is obtained in which rooms where a difference between an intake temperature and a set temperature (an indoor load) is small, and rooms where the difference between the intake temperature and the set temperature (the indoor load) is large become mixed, and a problem occurs in which rooms with a high indoor load experience a capability deficiency. Further, with respect to the above-described Patent Document 2 also, since the upper limit frequency is set, in a similar manner to

Patent Document 1, a problem occurs in which rooms with a high indoor load experience a capability deficiency.

In light of the foregoing, an object of the present invention is to provide a control device of a multiple-type air conditioner, a multiple-type air conditioner system provided with the same, and a control method and a control program for the multiple-type air conditioner that are capable of ensuring the sensation of a compressor starting up in energy saving control.

### Solution to Problem

A first aspect of the present invention is a control device of a multiple-type air conditioner provided with an outdoor unit having a compressor, and a plurality of indoor units connected in parallel to the outdoor unit, the control device including: selection means having a first startup mode, in which the compressor is controlled in a normal mode for a prescribed period of time until a set temperature set in the indoor unit is reached, and a second startup mode, in which the compressor is controlled in an energy saving mode in which an upper limit is applied to a control amount of the compressor, in contrast with the normal mode, until the set temperature set in the indoor unit is reached, the selection means allowing selection of one of the first startup mode and the second startup mode; and control means configured to control the compressor according to one of the first startup mode and the second startup mode selected by the selection means after the compressor has been started up.

According to the first aspect of the present invention, in the control device of the multiple-type air conditioner provided with the outdoor unit and the plurality of indoor units connected in parallel to the outdoor unit, it is possible to switch between the normal mode and the energy saving mode in which the upper limit is applied to the control amount of the compressor in the normal mode. When the first startup mode has been selected, after the compressor has been started up, the compressor is controlled for the prescribed period of time in the normal mode until the set temperature set in the indoor unit is reached, and when the second startup mode has been selected, the compressor is controlled in the energy saving mode until the set temperature set in the indoor unit is reached.

For a user who wishes to prioritize energy saving, the multiple-type air conditioner can be operated in the energy saving mode until the set temperature is reached, by selecting the second startup mode. Further, for a user who wishes to prioritize a feeling of comfort by reaching the set temperature rapidly rather than the control being gentle until the set temperature is reached by applying the upper limit to the control amount during energy saving, the user can obtain a feeling of comfort by selecting the first startup mode and raising the capability of the multiple-type air conditioner at the time of startup.

Further, "after the compressor has been started up" refers to "after the operation has started from a state in which all of the indoor units and the outdoor unit are stopped".

A second aspect of the present invention is a control device of a multiple-type air conditioner provided with an outdoor unit having a compressor, and a plurality of indoor units connected in parallel to the outdoor unit, the control device including: selection means having a first startup mode, in which the compressor is controlled in a normal mode for a prescribed period of time until a set temperature set in the indoor unit is reached, and a second startup mode, in which the compressor is controlled in an energy saving mode in which an upper limit is applied to a control amount of the compressor, in contrast with the normal mode, until the set temperature set in the indoor unit is reached, the selection means allowing selection of one of the first startup mode and the second startup mode; and control means configured to control the compressor according to one of the first startup mode and the second startup mode selected by the selection means after the compressor has been started up and a thermo of the indoor unit has been switched on.

According to the second aspect of the present invention, in the control device of the multiple-type air conditioner provided with the outdoor unit and the plurality of indoor units connected in parallel to the outdoor unit, it is possible to switch between the normal mode and the energy saving mode in which the upper limit is applied to the control amount of the compressor in the normal mode. When the first startup mode has been selected, the compressor is controlled for the prescribed period of time in the normal mode until the set temperature set in the indoor unit is reached after the compressor has been started up and the thermo of the indoor unit has been switched on, and when the second startup mode has been selected, the compressor is controlled in the energy saving mode until the set temperature set in the indoor unit is reached after the compressor has been started up and the thermo of the indoor unit has been switched on.

For the user who wishes to prioritize energy saving, the multiple-type air conditioner can be operated in the energy saving mode until the set temperature is reached, by selecting the second startup mode. Further, the user who wishes to prioritize a feeling of comfort by reaching the set temperature rapidly rather than the control being gentle until the set temperature is reached by applying the upper limit to the control amount during energy saving, the user can obtain a feeling of comfort by selecting the first startup mode and raising the capability of the multiple-type air conditioner at the time of startup.

Note that "after the compressor has been started up and the thermo of the indoor unit has been switched on" refers to "a case in which, during operation of the outdoor unit, another indoor unit has been introduced".

In either of the above-described control devices, it is preferable that setting of the prescribed period of time be variable.

By making variable the prescribed period of time over which the operation is performed in the first startup mode, values can be adjusted in accordance with the environment and experience. Note that the setting of the prescribed period of time is, for example, set on the basis of an empirical value of the user.

A third aspect of the present invention is a multiple-type air conditioner system including any one of the above-described control devices of the multiple-type air conditioner, and a multiple-type air conditioner provided with an outdoor unit having a compressor, and a plurality of indoor units connected in parallel to the outdoor unit.

A fourth aspect of the present invention is a control method of a multiple-type air conditioner provided with an outdoor unit having a compressor and a plurality of indoor units connected in parallel to the outdoor unit, the control method including the steps of: selecting one of a first startup mode, in which the compressor is controlled in a normal mode for a prescribed period of time until a set temperature set in the indoor unit is reached, and a second startup mode, in which the compressor is controlled in an energy saving mode in which an upper limit is applied to a control amount of the compressor, in contrast with the normal mode, until a set temperature set in the indoor unit is reached; and controlling the compressor according to one of the first startup mode and the second startup mode selected in the selecting step after the compressor has been started up.

A fifth aspect of the present invention is a control program of a multiple-type air conditioner provided with an outdoor unit having a compressor and a plurality of indoor units connected in parallel to the outdoor unit, the control program causing a computer to execute: selection processing having a first startup mode, in which the compressor is controlled in a normal mode for a prescribed period of time until a set temperature set in the indoor unit is reached, and a second startup mode, in which the compressor is controlled in an energy saving mode in which an upper limit is applied to a control amount of the compressor, in contrast with the normal mode, until the set temperature set in the indoor unit is reached, the selection processing allowing selection of one of the first startup mode and the second startup mode; and control processing controlling the compressor according to one of the first startup mode and the second startup mode selected by the selection processing after the compressor has been started up.

A sixth aspect of the present invention is a control method of a multiple-type air conditioner provided with an outdoor unit having a compressor and a plurality of indoor units connected in parallel to the outdoor unit, the control method including the steps of: selecting one of a first startup mode, in which the compressor is controlled in a normal mode for a prescribed period of time until a set temperature set in the indoor unit is reached, and a second startup mode, in which the compressor is controlled in an energy saving mode in which an upper limit is applied to a control amount of the compressor, in contrast with the normal mode, until the set temperature set in the indoor unit is reached; and controlling the compressor according to one of the first startup mode and the second startup mode selected in the selecting step after the compressor has been started up and a thermo of the indoor unit has been switched on.

A seventh aspect of the present invention is a control program of a multiple-type air conditioner provided with an outdoor unit having a compressor and a plurality of indoor units connected in parallel to the outdoor unit, the control program causing a computer to execute: selection processing having a first startup mode, in which the compressor is controlled in a normal mode for a prescribed period of time until a set temperature set in the indoor unit is reached, and a second startup mode, in which the compressor is controlled in an energy saving mode in which an upper limit is applied to a control amount of the compressor, in contrast with the normal mode, until the set temperature set in the indoor unit is reached, the selection processing allowing selection of one of the first startup mode and the second startup mode; and control processing controlling the compressor according to one of the first startup mode and the second startup mode selected by the selection processing after the compressor has been started up and a thermo of the indoor unit has been switched on.

### Advantageous Effect of Invention

The present invention achieves the effect of ensuring the sensation of a compressor starting up in energy saving control.

### Brief Description of Drawing

FIG. 1 is a diagram of an overall configuration of a coolant circuit of a multiple-type air conditioner according to the present invention.
FIG. 2 is an overall configuration diagram of a control device according to the present invention.
FIG. 3 is a diagram illustrating an example of control of a compressor operational rotational speed with respect to an indoor operational capacity.
FIG. 4 is a diagram illustrating a control process when control is performed by the control device of the multiple-type air conditioner according to the present invention.

### Description of Embodiment

Below, an embodiment of a control device of a multiple-type air conditioner, a multiple-type air conditioner system provided with the same, and a control method and a control program for the multiple-type air conditioner according to the present invention will be described with reference to the drawings.

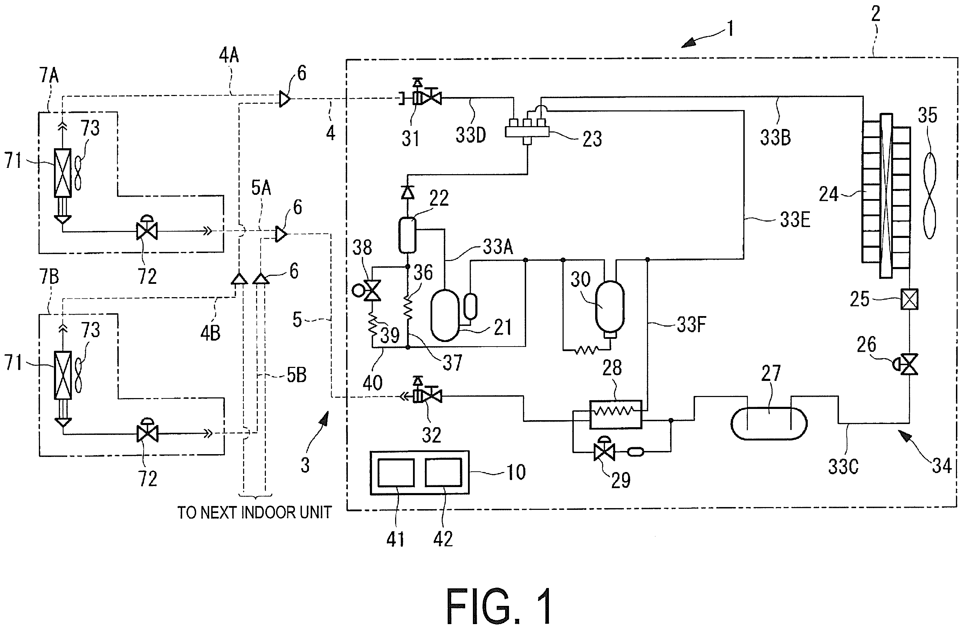

FIG. 1 illustrates an overall configuration of a coolant circuit of a multiple-type air conditioner system 1 according to the present embodiment. Here, the multiple-type air conditioner system 1 includes a single outdoor unit 2, gas-side piping 4 and liquid-side piping 5 leading from the outdoor unit 2, a plurality of indoor units 7A and 7B connected in parallel via branching devices 6 between the gas-side piping 4 and the liquid-side piping 5, and a control device 10. In FIG. 1, a case is illustrated in which there are two of the indoor units, namely the indoor units 7A and 7B, as an example. Below, where no particular distinction is made, the indoor units are described as the indoor unit 7 or the indoor units 7.

The outdoor unit 2 includes an inverter-driven compressor 21 that compresses a coolant, an oil separator 22 that separates a refrigeration oil from a coolant gas, a four-way selector valve 23 that selects a circulation direction of the coolant, an outdoor heat exchanger 24 that causes the coolant and outside air to exchange heat, a supercooling coil 25 integrally formed with the outdoor heat exchanger 24, an outdoor electronic expansion valve for heating (EEVH) 26, a receiver 27 that stores a liquid coolant, a supercooling heat exchanger 28 that applies supercooling to the liquid coolant, an electronic expansion valve for supercooling (EEVSC) 29 that controls a coolant amount to be branched to the supercooling heat exchanger 28, an accumulator 30 that separates a liquid portion from the coolant gas to be suctioned into the compressor 21 and allows only a gas portion to be suctioned by the compressor 21, a gas-side operation valve 31, and a liquid-side operation valve 32.

Each of the above-described devices on the outdoor unit 2 side is connected as in conventional art via coolant piping, such as discharge piping 33A, gas piping 33B, liquid piping 33C, gas piping 33D, intake piping 33E, and branching piping 33F for supercooling, and thus configures an outdoor coolant circuit 34. Further, an outdoor fan 35 that blows outside air to the outdoor heat exchanger 24 is provided to the outdoor unit 2.

Furthermore, in order to return the refrigeration oil separated from the discharged coolant gas in the oil separator 22 to the compressor 21 side in predetermined amounts, a parallel circuit formed of a first oil return circuit 37, which has a fixed aperture (aperture) 36 such as a capillary tube and the like, and a second oil return circuit 40, which has a solenoid valve 38, a fixed aperture (aperture) 39, such as a capillary tube and the like, is connected between the oil separator 22 and the intake piping 33E of the compressor 21.

The gas-side piping 4 and the liquid-side piping 5 are coolant piping connected to the gas-side operation valve 31 and the liquid-side operation valve 32 of the outdoor unit 2, and the lengths of the gas-side piping 4 and the liquid-side piping 5 are set as appropriate in accordance with a distance between the outdoor unit 2 and each of the indoor units 7A and 7B connected to the outdoor unit 2 during onsite installation work. An appropriate number of the branching devices 6 are disposed midway on the gas-side piping 4 and the liquid-side piping 5, and an appropriate number of the indoor units 7A and 7B are each connected via the branching devices 6. As a result, a refrigerating cycle 3 of one closed system is configured.

The indoor units 7A and 7B each include an indoor heat exchanger 71 that causes the coolant and inside air to exchange heat and thus performs indoor air conditioning, an indoor electronic expansion valve for cooling (EEVC) 72, and an indoor fan 73 that circulates the inside air via the indoor heat exchanger 71. The indoor units 7A and 7B are connected to the branching devices 6 via branched gas-side piping 4A and 4B and branched liquid-side piping 5A and 5B on the indoor side.

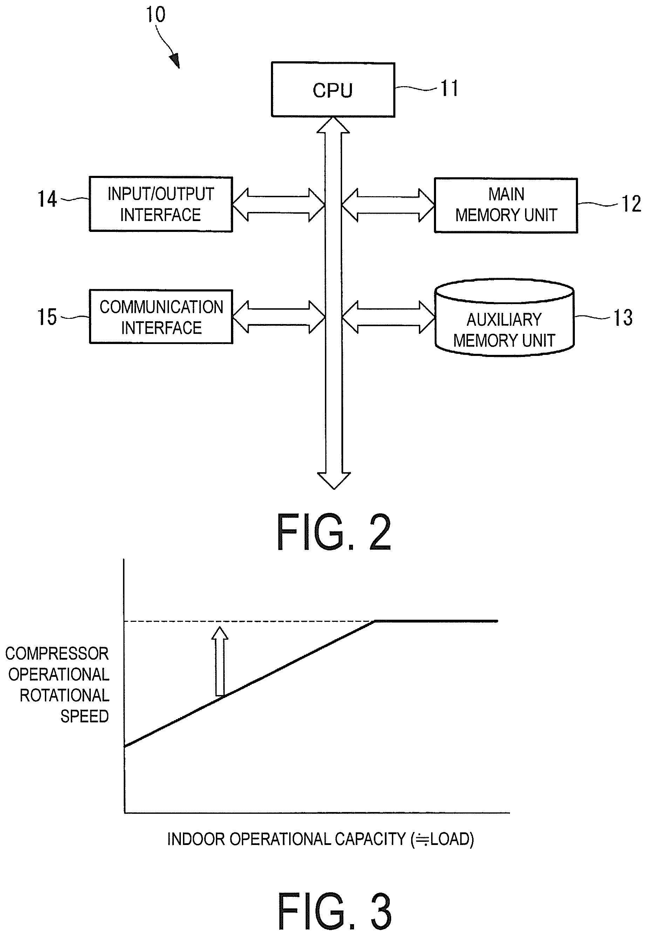

As illustrated in FIG. 2, the control device 10 is, for example, configured by a microcomputer having, mainly, a central processing unit (CPU) 11, a main memory unit 12, such as a random access memory (RAM), that temporarily stores calculation results and the like by the CPU 11, an auxiliary memory unit 13 that stores a program executed by the CPU 11, an input/output interface 14, such as a digital input/output interface or the like, and a communication interface 15.

The control device 10 is configured such that a control mode thereof can be switched between a normal mode, and an energy saving mode in which an upper limit is applied to a control amount of the compressor 21, in contrast to the normal mode. Further, the control device 10 is configured to be capable of setting a set temperature with respect to each of the indoor units 7, via the input/output interface 14 and the like.

Specifically, the control device 10 is provided with a selection unit (selection means) 41, and a control unit (control means) 42.

The selection unit 41 has a first startup mode in which the compressor 21 is controlled in the normal mode for a prescribed period of time until the set temperature set in the indoor unit 7 is reached, and a second startup mode in which the compressor 21 is controlled in the energy saving mode in which the upper limit is applied to the control amount of the compressor 21, in contrast with the normal mode, until the set temperature set in the indoor unit 7 is reached. The selection unit 41 allows selection of one of the first startup mode and the second startup mode. Note that the value of the prescribed period of time is variable, and is set manually by a user as appropriate, on the basis of an empirical value, for example. In the present embodiment, the prescribed period of time when the first startup mode has been selected is described as being 30 minutes after the startup of the compressor 21, but the prescribed period of time is not limited to this example.

For example, with the selection unit 41, a selection operation can be performed using a switching button that switches between enabling and disabling the energy saving mode. When the energy saving mode has been enabled by the selection unit 41 (namely, when the second startup mode has been selected), after the compressor 21 is started up, the upper limit is applied to the control amount in the normal mode by energy saving control, and the control is carried out gently until the set temperature is reached. When the energy saving mode has been disabled by the selection unit 41 (namely, when the first startup mode has been selected), after the compressor 21 is started up, the upper limit applied to the control amount in the energy saving mode is canceled, and the capability is raised during the startup period up to the set temperature. Comfort can thus be obtained. In this way, the first startup mode is a mode for controlling the control amount of the compressor 21 after the compressor 21 has been started up, and is different from a high-speed (turbo) mode, for example, in which the air volumes of the intake and exhaust are raised.

Note that the enabling and disabling of the energy saving mode by the selection unit 41 is the control of the startup period until the set temperature is reached from when the compressor 21 has been started up, and even when the energy saving mode has been canceled by the first startup mode and the compressor 21 is operated, the multiple-type air conditioner system 1 can also carry out energy saving operation after the prescribed period of time has elapsed.

After the compressor 21 has been started up, the control unit 42 controls the compressor 21 on the basis of one of the modes selected by the selection unit 41, namely, the first startup mode or the second startup mode. Further, "after the compressor 21 has started up" refers to "after the operation has started from a state in which all of the indoor units 7 and the outdoor unit 2 are stopped".

When the first startup mode has been selected, the control unit 42 cancels parameters adjusted for the purpose of energy saving, and performs control with a priority on capability.

Specifically, when the first startup mode has been selected, the control unit 42 returns the target pressure to a value that is not limited, discards an set upper limit rotational speed for control purposes, and causes the device to operate while using an operable rotational speed at which the device can operate as the upper limit rotational speed. The horizontal axis in FIG. 3 indicates an indoor operational capacity (≒ the load), and the vertical axis indicates a compressor operational rotational speed. A dotted line is an upper limit rotational speed of the device, and a solid line is the upper limit rotational speed for control purposes. For example, when the first startup mode has been selected and the compressor 21 is turned on, it is determined that conditions match. The upper limit rotational speed for control purposes is then raised as indicated by an arrow, and the control is performed with the priority on capability.

In the above-described multiple-type air conditioner system 1, the cooling operation is performed as described below.

The high-temperature, high-pressure coolant gas that has been compressed by the compressor 21 is discharged to the discharge piping 33A, and refrigeration oil contained in the coolant is separated by the oil separator 22. Subsequently, the coolant gas is circulated toward the gas piping 33B side via the four-way selector valve 23, and subjected to heat exchange with the outside air blown by the outdoor fan 35 to be condensed and liquefied in the outdoor heat exchanger 24. This liquid coolant is further cooled by the supercooling coil 25, is subsequently passed through the outdoor electronic expansion valve 26, and temporarily stored in the receiver 27.

The liquid coolant for which the circulation amount has been adjusted by the receiver 27 is partially diverted into the branching piping 33F for supercooling in the process of flowing through the supercooling heat exchanger 28 via the liquid piping 33C, and subjected to heat exchange with the coolant adiabatically expanded by the electronic expansion valve for supercooling (EEVSC) 29, thereby imparting the degree of supercooling to the liquid coolant. This liquid coolant is introduced from the outdoor unit 2 to the liquid-side piping 5 via the liquid-side operation valve 32, and the liquid coolant introduced to the liquid-side piping 5 is further diverted to the branched liquid-side piping 5A and 5B of each of the indoor units 7A and 7B via the branching devices 6.

The liquid coolant diverted to the branched liquid-side piping 5A and 5B flows into each of the indoor units 7A and 7B, is adiabatically expanded by the indoor electronic expansion valve (EEVC) 72 to form a gas-liquid two-phase flow, and is introduced into the indoor heat exchanger 71. In the indoor heat exchanger 71, heat is exchanged between the coolant and the inside air circulated by the indoor fan 73. The inside air is thus cooled and provided for indoor cooling. On the other hand, the coolant is gasified, flows to the branching device 6 via the branched gas piping 4A and 4B, and merges with the coolant gas from other indoor units in the gas-side piping 4.

The coolant gas merged in the gas-side piping 4 is returned once again to the outdoor unit 2 side, reaches the intake piping 33E via the gas-side operation valve 31, the gas piping 33D, and the four-way selector valve 23, and is merged with the coolant gas from the branched piping 33F. The merged gas is subsequently introduced into the accumulator 30. In the accumulator 30, the liquid portion contained in the coolant gas is separated, and only the gas portion is suctioned into the compressor 21. This coolant is once again compressed in the compressor 21. The cooling operation is performed by repeating the cycle described above.

On the other hand, the heating operation is performed as described below.

The high-temperature, high-pressure coolant gas that has been compressed by the compressor 21 is discharged to the discharge piping 33A, and refrigeration oil contained in the coolant is separated by the oil separator 22. The coolant is then circulated to the gas piping 33D side by the four-way selector valve 23. This coolant is led out from the outdoor unit 2 via the gas-side operation valve 31 and the gas-side piping 4, and is further introduced into the plurality of indoor units 7A and 7B via the branching devices 6 and the branched gas piping 4A and 4B on the indoor side.

The high-temperature, high-pressure coolant gas introduced into the indoor units 7A and 7B is subjected to heat exchange with the inside air circulated by the indoor fan 73 in the indoor heat exchanger 71, and the inside air is thus heated and provided for indoor heating. The liquid coolant condensed and liquefied in the indoor heat exchanger 71 reaches the branching device 6 via the indoor electronic expansion valve (EEVC) 72 and the branched liquid piping 5A and 5B, is merged with the coolant from other indoor units, and is subsequently returned to the outdoor unit 2 via the liquid-side piping 5.

The coolant that has returned to the outdoor unit 2 reaches the supercooling heat exchanger 28 via the liquid-side operation valve 32 and the liquid piping 33C, and is subjected to supercooling in the same manner as during cooling, and then introduced into the receiver 27, where the circulation amount thereof is adjusted by being temporarily stored. This liquid coolant is supplied to the outdoor electronic expansion valve (EEVH) 26 via the liquid piping 33C, is then adiabatically expanded, and subsequently introduced into the outdoor heat exchanger 24 via the supercooling coil 25.

In the outdoor heat exchanger 24, heat is exchanged between the coolant and the outside air blown from the outdoor fan 35, and the coolant absorbs the heat from the outside air and is evaporated and gasified. This coolant passes through the gas piping 33B, the four-way selector valve 23, and the intake piping 33E from the outdoor heat exchanger 24, is merged with the coolant from the branched piping 33F for supercooling, and is subsequently introduced into the accumulator 30. In the accumulator 30, the liquid portion contained in the coolant gas is separated, and only the gas portion is suctioned into the compressor 21. This coolant is once again compressed in the compressor 21. The heating operation is performed by repeating the cycle described above.

During the above-described cooling operation and heating operation, the refrigeration oil separated from the discharged coolant gas in the oil separator 22 is returned to the compressor 21 side via the first oil return circuit 37 and the second oil return circuit 40 that are connected in parallel to each other, the first oil return circuit having the fixed aperture 36 and the second oil return circuit 40 having a solenoid valve 38 and the fixed aperture 39. In this way, a constant amount of the refrigeration oil is maintained in the compressor 21, and sliding locations inside the compressor 21 are lubricated. The solenoid valve 38 provided in the second oil return circuit 40 is normally operated to open and close at appropriate timings during the cooling operation and the heating operation, and a configuration is thus obtained by which the return amount of the oil separated in the oil separator 22 to the compressor 21 side can be adjusted.

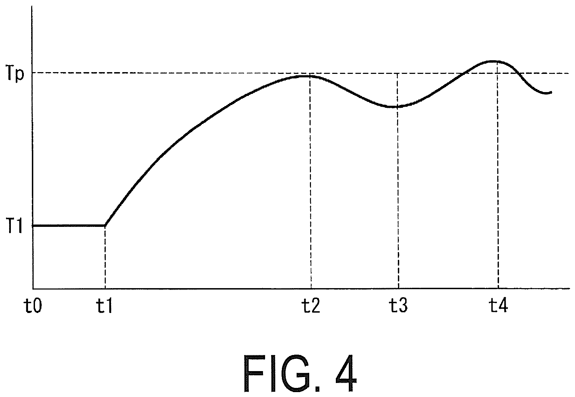

Hereinafter, operations of the control device 10 of the multiple-type air conditioner system 1 according to the present embodiment will be described with reference to FIG. 4. The horizontal axis in FIG. 4 indicates the time, and the vertical axis indicates the temperature [degrees Celsius].

At a time point t0, the temperature is an initial room temperature T1, and the compressor 21 is stopped. The control device 10 is operated by a user who wishes the room temperature to rapidly reach a set temperature Tp set in the multiple-type air conditioner system 1, and the first startup mode is selected. At a time point t1, the operation of the multiple-type air conditioner system 1 is started from a state in which all of the indoor units 7 and the outdoor unit 2 are stopped, and a thermo is switched on. After the compressor 21 has been started up, the energy saving mode is canceled for the prescribed period of time (30 minutes, for example), and the limitation on the control amount of the compressor 21 that is applied in the energy saving mode is disabled.

At a time point t2, when the prescribed period of time (30 minutes) has elapsed from the time point t1, the first startup mode is switched to a normal operation, and if the room temperature reaches roughly the set temperature Tp, the thermo is switched off. At this time, if the energy saving operation is selected, the multiple-type air conditioner system 1 is controlled using the energy saving operation.

As described above, with the control device 10 of the multiple-type air conditioner, the multiple-type air conditioner system 1 provided with the control device 10, and the control method and the control program of the multiple-type air conditioner according to the present embodiment, after the compressor 21 has been started up, if the first startup mode has been selected, the compressor 21 is controlled for the prescribed period of time until the set temperature set in the indoor unit 7 is reached, using the normal mode in which the upper limit on the control amount applied during the energy saving mode is canceled. If the second startup mode has been selected, the compressor 21 is controlled using the energy saving mode until the set temperature set in the indoor unit 7 is reached.

A feeling of comfort of the multiple-type air conditioner differs depending on the user. For example, for a user desiring a rapid temperature change until the set temperature is reached, the user may feel that the gentle temperature change using the energy saving mode is not comfortable. In this type of case, for the user who wishes to prioritize a feeling of comfort by reaching the set temperature rapidly rather than the control being gentle until the set temperature is reached by applying the upper limit to the control amount during energy saving, the user can obtain a feeling of comfort by selecting the first startup mode and raising the capability of the multiple-type air conditioner at the time of startup. Further, for the user who wishes to prioritize energy saving, the multiple-type air conditioner can be operated in the energy saving mode until the set temperature is reached, by selecting the second startup mode.

In addition, since the energy saving mode can be disabled at the time of startup, the risk of capability deficiency due to the energy saving control can be reduced.

### [Modified example]

In the above-described embodiment, an example is described in which, after the compressor 21 has been started up, a selection (selection of the startup mode) is made as to whether to select the energy saving mode or not, but the present invention is not limited to this example.

For example, after the compressor 21 has been started up and the indoor units 7 are in a state of having the thermo switched on, in other words, during the operation of the outdoor unit 2, the selection as to whether to select the energy saving mode or not may be made when another indoor unit 7 is introduced.

This will be explained specifically with reference to the time point t2 and thereafter, as illustrated in FIG. 4. Here, it is assumed that the first startup mode has been selected by the selection unit 41.

It is assumed that, at the time point t2, the operation of the multiple-type air conditioner system 1 is continuing (in other words, the compressor 21 is on), the room temperature has reached the set temperature Tp, and the thermo has been switched off. After that, at a time point t3, when the thermo of the indoor unit 7 is switched on, for a prescribed period of time (10 minutes, for example) after the thermo is switched on, the control is performed as the first startup mode in which the energy saving mode is canceled and operation is performed by the normal mode, such that the room temperature rapidly reaches the set temperature Tp.

At a time point t4, when the prescribed period of time (10 minutes) from the time point t3 has elapsed, if the room temperature reaches roughly the set temperature Tp, the thermo is switched off, and the first startup mode is switched to the normal operation. At this time, if the energy saving operation is selected, the multiple-type air conditioner system 1 is controlled using the energy saving operation.

In this way, even if another indoor unit is introduced during the operation of the outdoor unit, control can be performed that causes the room temperature to rapidly reach the set temperature Tp.

Note that in the present invention, since the prescribed period of time when the first startup mode has been selected is a fixed setting, as indicated by the time point t4 in FIG. 4, when the compressor 21 is controlled for the set prescribed period of time, there are also cases in which the set temperature Tp is exceeded. In this type of case, it is preferable to re-set an appropriate time interval on the control device 10 by changing a time interval of the prescribed period of time.

The present invention is not limited to the embodiment as described above, and changes can be made as appropriate without departing from the scope of the present invention.

### Reference Signs List

- 1: Multiple-type air conditioner
- 2: Outdoor unit
- 7: Indoor unit
- 10: Control device
- 41: Selection unit
- 42: Control unit

## Claims

1. A control device of a multiple-type air conditioner provided with an outdoor unit having a compressor, and a plurality of indoor units connected in parallel to the outdoor unit, the control device comprising:
selection means having
a first startup mode, in which the compressor is controlled in a normal mode for a prescribed period of time until a set temperature set in the indoor unit is reached, and
a second startup mode, in which the compressor is controlled in an energy saving mode in which an upper limit is applied to a control amount of the compressor, in contrast with the normal mode, until the set temperature set in the indoor unit is reached,
the selection means allowing selection of one of the first startup mode and the second startup mode; and
control means configured to control the compressor according to one of the first startup mode and the second startup mode selected by the selection means after the compressor has been started up.

2. A control device of a multiple-type air conditioner provided with an outdoor unit having a compressor, and a plurality of indoor units connected in parallel to the outdoor unit, the control device comprising:
selection means having
a first startup mode, in which the compressor is controlled in a normal mode for a prescribed period of time until a set temperature set in the indoor unit is reached, and
a second startup mode, in which the compressor is controlled in an energy saving mode in which an upper limit is applied to a control amount of the compressor, in contrast with the normal mode, until the set temperature set in the indoor unit is reached,
the selection means allowing selection of one of the first startup mode and the second startup mode; and
control means configured to control the compressor according to one of the first startup mode and the second startup mode selected by the selection means after the compressor has been started up and a thermo of the indoor unit has been switched on.

3. The control device of the multiple-type air conditioner according to claim 1 or claim 2, wherein setting of the prescribed period of time is variable.

4. A multiple-type air conditioner system comprising:
the control device of the multiple-type air conditioner according to any one of claims 1 to 3; and
a multiple-type air conditioner provided with an outdoor unit having a compressor and a plurality of indoor units connected in parallel to the outdoor unit.

5. A control method of a multiple-type air conditioner provided with an outdoor unit having a compressor and a plurality of indoor units connected in parallel to the outdoor unit, the control method comprising the steps of:
selecting one of
a first startup mode, in which the compressor is controlled in a normal mode for a prescribed period of time until a set temperature set in the indoor unit is reached, and
a second startup mode, in which the compressor is controlled in an energy saving mode in which an upper limit is applied to a control amount of the compressor, in contrast with the normal mode, until a set temperature set in the indoor unit is reached; and
controlling the compressor according to one of the first startup mode and the second startup mode selected in the selecting step after the compressor has been started up.

6. A control program of a multiple-type air conditioner provided with an outdoor unit having a compressor and a plurality of indoor units connected in parallel to the outdoor unit, the control program causing a computer to execute:
selection processing having
a first startup mode, in which the compressor is controlled in a normal mode for a prescribed period of time until a set temperature set in the indoor unit is reached, and
a second startup mode, in which the compressor is controlled in an energy saving mode in which an upper limit is applied to a control amount of the compressor, in contrast with the normal mode, until the set temperature set in the indoor unit is reached,
the selection processing allowing selection of one of the first startup mode and the second startup mode; and
control processing controlling the compressor according to one of the first startup mode and the second startup mode selected by the selection processing after the compressor has been started up.

7. A control method of a multiple-type air conditioner provided with an outdoor unit having a compressor and a plurality of indoor units connected in parallel to the outdoor unit, the control method comprising the steps of:
selecting one of
a first startup mode, in which the compressor is controlled in a normal mode for a prescribed period of time until a set temperature set in the indoor unit is reached, and
a second startup mode, in which the compressor is controlled in an energy saving mode in which an upper limit is applied to a control amount of the compressor, in contrast with the normal mode, until a set temperature set in the indoor unit is reached; and
controlling the compressor according to one of the first startup mode and the second startup mode selected in the selecting step after the compressor has been started up and a thermo of the indoor unit has been switched on.

8. A control program of a multiple-type air conditioner provided with an outdoor unit having a compressor and a plurality of indoor units connected in parallel to the outdoor unit, the control program causing a computer to execute:
selection processing having
a first startup mode, in which the compressor is controlled in a normal mode for a prescribed period of time until a set temperature set in the indoor unit is reached, and
a second startup mode, in which the compressor is controlled in an energy saving mode in which an upper limit is applied to the control amount of the compressor, in contrast with the normal mode, until the set temperature set in the indoor unit is reached, the selection processing allowing selection of one of the first startup mode and the second startup mode; and
control processing controlling the compressor according to one of the first startup mode and the second startup mode selected by the selection processing after the compressor has been started up and a thermo of the indoor unit has been switched on.

## Amended claims

### Amended claims under Art. 19.1 PCT

1. [Amended] A control device of a multiple-type air conditioner provided with an outdoor unit having a compressor, and a plurality of indoor units connected in parallel to the outdoor unit, the control device comprising:
selection means having
a first startup mode, in which the compressor is controlled in a normal mode for a prescribed period of time until a set temperature set in the indoor unit is reached, and
a second startup mode, in which the compressor is controlled in an energy saving mode in which an upper limit is applied to a control amount of the compressor, in contrast with the normal mode, until the set temperature set in the indoor unit is reached,
the selection means allowing selection by a user of one of the first startup mode and the second startup mode; and
control means configured to control the compressor according to one of the first startup mode and the second startup mode selected by the selection means after the compressor has been started up.

2. [Amended] A control device of a multiple-type air conditioner provided with an outdoor unit having a compressor, and a plurality of indoor units connected in parallel to the outdoor unit, the control device comprising:
selection means having
a first startup mode, in which the compressor is controlled in a normal mode for a prescribed period of time until a set temperature set in the indoor unit is reached, and
a second startup mode, in which the compressor is controlled in an energy saving mode in which an upper limit is applied to a control amount of the compressor, in contrast with the normal mode, until the set temperature set in the indoor unit is reached,
the selection means allowing selection by a user of one of the first startup mode and the second startup mode; and
control means configured to control the compressor according to one of the first startup mode and the second startup mode selected by the selection means after the compressor has been started up and a thermo of the indoor unit has been switched on.

3. The control device of the multiple-type air conditioner according to claim 1 or claim 2, wherein setting of the prescribed period of time is variable.

4. A multiple-type air conditioner system comprising:
the control device of the multiple-type air conditioner according to any one of claims 1 to 3; and
a multiple-type air conditioner provided with an outdoor unit having a compressor and a plurality of indoor units connected in parallel to the outdoor unit.

5. [Amended] A control method of a multiple-type air conditioner provided with an outdoor unit having a compressor and a plurality of indoor units connected in parallel to the outdoor unit, the control method comprising the steps of:
allowing a user to select one of
a first startup mode, in which the compressor is controlled in a normal mode for a prescribed period of time until a set temperature set in the indoor unit is reached, and
a second startup mode, in which the compressor is controlled in an energy saving mode in which an upper limit is applied to a control amount of the compressor, in contrast with the normal mode, until a set temperature set in the indoor unit is reached; and
controlling the compressor according to one of the first startup mode and the second startup mode selected in the selecting step after the compressor has been started up.

6. [Amended] A control program of a multiple-type air conditioner provided with an outdoor unit having a compressor and a plurality of indoor units connected in parallel to the outdoor unit, the control program causing a computer to execute:
selection processing having
a first startup mode, in which the compressor is controlled in a normal mode for a prescribed period of time until a set temperature set in the indoor unit is reached, and
a second startup mode, in which the compressor is controlled in an energy saving mode in which an upper limit is applied to a control amount of the compressor, in contrast with the normal mode, until the set temperature set in the indoor unit is reached,
the selection processing allowing a user to select one of the first startup mode and the second startup mode; and
control processing controlling the compressor according to one of the first startup mode and the second startup mode selected by the selection processing after the compressor has been started up.

7. [Amended] A control method of a multiple-type air conditioner provided with an outdoor unit having a compressor and a plurality of indoor units connected in parallel to the outdoor unit, the control method comprising the steps of:
allowing a user to select one of
a first startup mode, in which the compressor is controlled in a normal mode for a prescribed period of time until a set temperature set in the indoor unit is reached, and
a second startup mode, in which the compressor is controlled in an energy saving mode in which an upper limit is applied to a control amount of the compressor, in contrast with the normal mode, until a set temperature set in the indoor unit is reached; and
controlling the compressor according to one of the first startup mode and the second startup mode selected in the selecting step after the compressor has been started up and a thermo of the indoor unit has been switched on.

8. [Amended] A control program of a multiple-type air conditioner provided with an outdoor unit having a compressor and a plurality of indoor units connected in parallel to the outdoor unit, the control program causing a computer to execute:
selection processing having
a first startup mode, in which the compressor is controlled in a normal mode for a prescribed period of time until a set temperature set in the indoor unit is reached, and
a second startup mode, in which the compressor is controlled in an energy saving mode in which an upper limit is applied to a control amount of the compressor, in contrast with the normal mode, until the set temperature set in the indoor unit is reached,
the selection processing allowing a user to select one of the first startup mode and the second startup mode; and
control processing controlling the compressor according to one of the first startup mode and the second startup mode selected by the selection processing after the compressor has been started up and a thermo of the indoor unit has been switched on.
